# EUROPÄISCHE PATENTSCHRIFT

(11) **EP 3 581 424 B1**
(45) Veröffentlichungstag und Bekanntmachung des Hinweises auf die Patenterteilung: **31.03.2021**
(21) Anmeldenummer: 19179367.8
(22) Anmeldetag: 11.06.2019
(51) Int. Cl.: B60K 35/00, B60K 37/06

(54) **REFLEKTORANORDNUNG UND BELEUCHTBARE BAUGRUPPE**
REFLECTOR ASSEMBLY AND ILLUMINATED ASSEMBLY
DISPOSITIF RÉFLECTEUR ET MODULE POUVANT ÊTRE ÉCLAIRÉ

(30) Priorität: 12.06.2018 DE 102018114017
(43) Veröffentlichungstag der Anmeldung: 18.12.2019
(73) Patentinhaber: Dr. Schneider Kunststoffwerke GmbH, 96317 Kronach-Neuses (DE)
(72) Erfinder: Horner, Domenic, 96317 Kronach (DE); Baier, Ralf, 96364 Marktrodach (DE)

(56) Entgegenhaltungen:
- WO-A1-2017/220450
- DE-A1-102011 112 222
- US-A1- 2010 254 128

## Beschreibung

Es werden eine Reflektoranordnung zur Beleuchtung von verschiedenen Bereichen, die zueinander beabstandet sind, und eine Baugruppe beschrieben, die mindestens eine solche Reflektoranordnung aufweist.

Die Reflektoranordnung kann zur Beleuchtung verschiedener Bereiche, die zueinander beabstandet sind, verwendet werden. Die Reflektoranordnung kann beispielsweise zur Beleuchtung von Schaltflächen oder Bedienelementen verwendet werden. Im Weiteren kann die Reflektoranordnung zur Beleuchtung von Symbolen und Bereichen verwendet werden, welche Zustände von weiteren Einrichtungen anzeigen oder Informationen über Zustände liefern. Solche Einrichtungen finden sich beispielsweise in Fahrzeugen. Fahrzeuge können beispielsweise Kraftfahrzeuge, wie Pkw, Lkw oder Busse, Züge, Flugzeuge oder Schiffe sein. Die Reflektoranordnung kann mit Funktionselementen gekoppelt sein, sodass eine Beleuchtung in Abhängigkeit von Bedieneingaben erfolgt.

### Stand der Technik

Zur Beleuchtung von Funktionsbereichen ist aus DE 10 2014 009 199 A1 ein Montageelement zum Einbau in ein Panel eines Fahrzeugs mit einem beleuchtbaren Bereich bekannt, wobei ein Hohlreflektor und eine LED vorgesehen sind und die Beleuchtung verschiedener Funktionsbereiche über jeweils einen Hohlreflektor mit einer zugeordneten LED erfolgt.

Eine ähnliche Vorrichtung ist aus DE 198 04 337 B4 bekannt. Darin wird eine Instrumententafel von reduzierter Tiefe beschrieben, wobei im Bereich eines Anzeigezeichens eine Beleuchtungsöffnung vorgesehen und eine Lichtquelle angeordnet sind. Hinter der Lichtquelle ist ein Film angeordnet, der die Lichtquelle umgibt und einen Leuchtkasten für die Lichtquelle bildet.

Aus der US 2012 0 250 318 A1, der US 2010 0 254 128 A1 und der DE 10 2011 112 222 A1 sind ähnliche Reflektoranordnungen bekannt. Die Lichtquelle befindet sich am Grund eines als Hohlspiegel ausgeführten Reflektors. Vor der Lichtquelle befindet sich ein weiterer Reflektor, der das von der Lichtquelle ausgestrahlte Licht umlenkt und zum Hohlspiegel leitet.

Weitere Reflektoranordnungen sind beispielsweise aus EP 2 690 786 A1 und EP 1 985 930 A1 bekannt.

Die bekannten Reflektoranordnungen weisen jedoch den Nachteil auf, dass für jeden beleuchtbaren Funktionsbereich ein separater Hohlreflektor und eine separate Leuchtdiode oder ein anderes Leuchtmittel erforderlich sind. Die bekannten Ausführungen weisen den offensichtlichen Nachteil einer Vielzahl von Bauteilen auf. Zudem sind mehrere Bearbeitungsschritte erforderlich, was die Zeit zur Herstellung und damit auch die Kosten zusätzlich erhöhen.

### Aufgabe

Es besteht daher die Aufgabe eine Reflektoranordnung anzugeben, die eine Beleuchtung verschiedener Bereiche ermöglicht, wobei weniger Bauteile erforderlich sind.

Im Weiteren soll die Reflektoranordnung mehrere verschiedene Beleuchtungsmodi bereitstellen können.

### Lösung

Die vorstehend genannte Aufgabe wird durch eine Reflektoranordnung gemäß Anspruch 1 zur Beleuchtung von verschiedenen Bereichen gelöst, die zueinander beabstandet sind, mit einer ersten Lichtquelle und mindestents einer zweiten Lichtquelle und einem Hohlreflektor, welcher die Bereiche umfasst, wobei
- ein zweiter Reflektor angeordnet ist, der mindestens zwei Reflexionsflächen aufweist, die zueinander geneigt sind,
- die erste Lichtquelle und der zweite Reflektor übereinanderliegend angeordnet sind, und
- die erste Lichtquelle derart angeordnet ist, dass eine Beleuchtung der Bereiche durch eine Lichtreflexion über den zweiten Reflektor und den Hohlreflektor bereitgestellt ist.

Der zweite Reflektor ermöglicht über die Reflexionsflächen ein Ablenken der Lichtstrahlen auf die Wände des Hohlreflektors und von dort zu den beleuchtbaren Bereichen, sodass eine homogene Ausleuchtung verschiedener Bereiche bereitgestellt wird. Über den Hohlreflektor allein lässt sich keine homogene Ausleuchtung verschiedener Bereiche realisieren, die beispielsweise um einen Hohlreflektor herum angeordnet sind. Die hierin beschriebene technische Lehre ermöglicht über den zweiten Reflektor jedoch die homogene Ausleuchtung, indem die Lichtreflexion über den zweiten Reflektor derart erfolgt, dass die Lichtstrahlen gebündelt zu den beleuchtbaren Bereichen geleitet werden. Ohne einen zweiten Reflektor würden sich bei den beleuchtbaren Bereichen stärker und schwächer beleuchtete Abschnitte ergeben.

Die Reflektoranordnung ermöglicht insbesondere bei komplexen Geometrien eine homogene Ausleuchtung. So kann beispielsweise die Ausleuchtung von sternförmig oder kreuzförmig angeordneten beleuchtbaren Bereichen mit nur einer Lichtquelle bzw. einem Leuchtmittel realisiert werden. Zugleich wird über den zweiten Reflektor dabei sichergestellt, dass sämtliche Bereiche homogen ausgeleuchtet werden und keine Abschnitte mit einer helleren oder dunkleren Beleuchtung aufweisen.

Die Reflektoranordnung benötigt deutlich weniger Bauteile als ähnliche Vorrichtungen aus dem Stand der Technik, da die Beleuchtungsanordnung nur ein einziges Leuchtmittel benötigt. Dadurch werden weniger Bauteile benötigt und die Bearbeitungszeit zur Herstellung ist zusätzlich reduziert. Dies wirkt sich ebenfalls positiv auf die Kosten einer solchen Reflektoranordnung oder Baugruppe, umfassend eine solche Reflektoranordnung, aus.

Ein weiterer Vorteil, der sich durch die Reduktion der erforderlichen Leuchtmittel ergibt, besteht in dem geringeren Gewicht und dem verringerten Bauraum, der für die Reflektoranordnung erforderlich ist. Ein weiterer Vorteil liegt in dem geringeren Energieverbrauch und der geringeren Wärmeentwicklung durch die reduzierte Anzahl an Leuchtmitteln.

Bisherige aus dem Stand der Technik bekannte Anordnungen benötigen ein Leuchtmittel pro beleuchtbaren Bereich oder Lichtleiter und sonstige Einrichtungen. Solche Hilfsmittel sind für die Reflektoranordnung der hierin beschriebenen Ausführung jedoch nicht erforderlich.

Die Wände des Hohlreflektors und die Reflexionsflächen des zweiten Reflektors sind so zueinander und in Abhängigkeit der Position der ersten Lichtquelle angeordnet, dass eine homogene Ausleuchtung erfolgt. Für verschiedene Anordnungen ergeben sich daher verschiedene Abstände zwischen den Reflexionsflächen des zweiten Reflektors und einer gegenüberliegenden bzw. den zweiten Reflektor umgebenden Wand des Hohlreflektors sowie zu der ersten Lichtquelle.

Die beleuchtbaren Bereiche können beispielsweise Symbole- und/oder Zeichen aufweisen. Die Zeichen und/oder Symbole können in einer Blende eingebracht sein. Die Blende kann aus Kunststoff bestehen und nur im Bereich der Symbole und/oder Zeichen durchleuchtbar sein. Bei einer aktivierten Lichtquelle erscheint daher das Symbol und/oder Zeichen.

Der zweite Reflektor ist über der ersten Lichtquelle angeordnet. Das abgegebene Licht der ersten Lichtquelle strahlt nach oben und wird über die Reflexionsflächen des zweiten Reflektors auf die Wände des Hohlreflektors geleitet, von welchen aus die Lichtstrahlen zu den beleuchtbaren Bereichen geleitet werden.

Die Wände des Hohlreflektors sowie die Reflexionsflächen des zweiten Reflektors sind reflektierend ausgebildet. Dies trifft für alle Ausführungen zu. So kann eine Beschichtung von Kunststoffoberflächen erfolgen, um eine reflektierende Schicht bereitzustellen. In weiteren Ausführungsformen können der zweite Reflektor und der Hohlreflektor auch aus einem reflektierenden Material, zum Beispiel einem Metall, bestehen.

Zwischen dem zweiten Reflektor und der gegenüberliegenden Wand des Hohlreflektors sind Kanäle ausgebildet, die jeweils mindestens einem beleuchtbaren Bereich zugeordnet sind, wobei mindestens eine zweite Lichtquelle vorgesehen ist, die mindestens einem beleuchtbaren Bereich zugeordnet ist, wobei der zweite Reflektor als Lichtschott für andere beleuchtbare Bereiche dient. Über die erste Lichtquelle wird eine Beleuchtung sämtlicher beleuchtbaren Bereiche erzielt. Beispielsweise kann hierüber eine Grundbeleuchtung bereitgestellt werden. Die beleuchtbaren Bereiche mit Symbolen und/oder Zeichen werden über die erste Lichtquelle damit homogen ausgeleuchtet und sind für einen Benutzer sichtbar. Über die zweite Lichtquelle lässt sich eine Veränderung eines Zustands darstellen, der mit dem entsprechenden beleuchtbaren Bereich gekoppelt ist. Die zweite Lichtquelle kann Licht in einer anderen Farbe ausgeben, wodurch der beleuchtbare Bereich in einer anderen Farbe beleuchtet wird. Damit jedoch andere beleuchtbare Bereiche, deren Zustand nicht verändert worden ist, nicht in der Lichtfarbe der zweiten Lichtquelle leuchten, ist der zweite Reflektor auch als Lichtschott ausgebildet. Dies kann dadurch erreicht werden, dass der zweite Reflektor beispielsweise relativ weit nach unten ragt und sehr spitz aufeinander zulaufende schräge Flächen als Reflexionsflächen aufweist. Die erste Lichtquelle und die mindestens eine zweite Lichtquelle sind zusätzlich so angeordnet, dass die erste Lichtquelle eine Beleuchtung sämtlicher beleuchtbarer Bereiche über den zweiten Reflektor bereitstellt. Die mindestens eine zweite Lichtquelle hingegen ist so angeordnet, dass diese über die Wände des Hohlreflektors und den zweiten Reflektor eine Beleuchtung des Bereichs durchführen kann, dem die zweite Lichtquelle zugeordnet ist. Austretende Lichtstrahlen werden über den als Lichtschott dienenden zweiten Reflektor nicht in andere Bereiche gelassen.

Die mindestens eine zweite Lichtquelle ist hierzu exzentrisch angeordnet und der Wand des Hohlreflektors zugewandt. Die exzentrische Anordnung stellt zum einen sicher, dass kein Licht in andere Bereiche bzw. Kanäle gelangen kann und hat zum anderen keinen Nachteil für die Beleuchtung des Bereichs, da über den zweiten Reflektor und die gegenüberliegende Wand des Hohlreflektors eine Lichtablenkung zur homogenen Ausleuchtung des Bereichs erreicht wird.

In den vorstehend beschriebenen Varianten wird stets eine homogene Ausleuchtung der beleuchtbaren Bereiche erreicht. Die beleuchtbaren Bereiche können als Funktionsbereiche ausgebildet und auch mit Schaltflächen verknüpft sein, sodass eine Berührung der beleuchtbaren Bereiche eine Veränderung von Zuständen oder Einrichtungen hervorruft.

Die beleuchtbaren Bereiche sind an verschiedenen Positionen angeordnet und können auch sehr komplexe Anordnungen aufweisen. Dementsprechend ist der Hohlreflektor so ausgebildet, dass dieser für die Beleuchtung erforderliche Schrägen und gekrümmte Verläufe aufweist. Im Weiteren kann der zweite Reflektor daher auch mehrere schräge Flächen und/oder zusätzlich gekrümmte Flächen als Reflexionsflächen aufweisen, die eine Lichtablenkung durch Reflektion zur homogenen Ausleuchtung bereitstellen.

Der zweite Reflektor kann aufeinander zulaufende, schräge Flächen als Reflexionsflächen aufweisen und die Spitze des zweiten Reflektors kann auf die erste Lichtquelle gerichtet sein. In einer solchen Ausführung werden die auftreffenden Lichtstrahlen über die schrägen Flächen seitlich abgelenkt und können über zusätzlich entsprechend ausgebildete Wände des Hohlreflektors, beispielsweise nach oben, zu den beleuchtbaren Bereichen abgelenkt werden.

Hierzu kann der Hohlreflektor gekrümmte Wände aufweisen. Die Krümmung der Wände wird nach Maßgabe der Anordnung der beleuchtbaren Bereiche und in Abhängigkeit der Position des zweiten Reflektors sowie dessen Ausbildung und der Position der ersten Lichtquelle bestimmt. Zusätzlich kann die Position mindestens einer zweiten Lichtquelle ebenfalls erforderlich für die Ausbildungen der Wände des Hohlreflektors sein. Im Weiteren kann der Hohlreflektor auch schräge Flächen aufweisen.

Der Hohlreflektor kann darüber hinaus nach innen ragende Arme aufweisen, die mit dem zweiten Reflektor verbunden sind. Der zweite Reflektor kann daher als integraler Bestandteil des Hohlreflektors ausgebildet sein. Darüber hinaus kann auch eine Reflektorplatte vorgesehen sein, die mehrere Reflektoranordnungen aufweist. Die Reflektoranordnungen können unterschiedlich sein. Eine solche Reflektorplatte kann beispielsweise aus Kunststoff bestehen, wodurch sich komplexe Strukturen kostengünstig und schnell in einem Spritzgussprozess herstellen lassen. Um eine reflektierende Oberfläche für die Reflektoranordnungen zu erzeugen, kann der Kunststoff beschichtet werden. Das Beschichten kann beispielsweise durch ein Besprühen oder ein Bad erfolgen, wobei die Reflektorplatte in eine entsprechende Flüssigkeit getaucht wird.

Der zweite Reflektor kann in weiteren Ausführungen pyramidenförmig oder kegelförmig sein. Auch bei einer kegelförmigen Ausbildung des zweiten Reflektors weist dieser zueinander geneigte Reflexionsflächen auf. Die zueinander geneigten Reflexionsflächen eines kegelförmigen Reflektors stellen dabei die Mantelwand des Reflektors dar. Der zweite Reflektor kann beispielsweise 2, 3, 4, 5,... Reflexionsflächen aufweisen, die beispielsweise von einem gemeinsamen Mittelpunkt ("Spitze") sich erstrecken.

Die vorstehend genannte Aufgabe wird auch durch eine beleuchtbare Baugruppe gelöst, mindestens aufweisend ein Gehäuse mit einer Deckschicht mit beleuchtbaren Bereichen, die Symbole und/oder Zeichen aufweisen, und eine Reflektoranordnung der vorstehend beschriebenen Varianten, wobei unterhalb der Deckschicht ein Hohlreflektor angeordnet ist, der die Symbole und/oder Zeichnungen umgibt, wobei der Hohlreflektor einen zweiten Reflektor umgibt, der so angeordnet ist, dass von einer ersten Lichtquelle abgegebenes Licht über den zweiten Reflektor und den Hohlreflektor zu den beleuchtbaren Bereichen reflektiert.

Die beleuchtbare Baugruppe kann auch Sensorelemente aufweisen, sodass eine Betätigung oder Berührung der beleuchtbaren Bereiche als Bedienbefehl erfasst werden kann. Die beleuchtbare Baugruppe weist zusätzlich mindestens eine Leiterplatte auf, an der die erste Lichtquelle angeordnet ist und weitere Baukomponenten angeordnet sind. Die Komponenten umfassen elektronische Bauteile, Verbindungen, Steuereinheiten und einen Anschluss an ein Bussystem, beispielsweise eines Fahrzeugs, zur Datenübertragung und Energieversorgung.

Die erste Lichtquelle und die mindestens eine zweite Lichtquelle können durch Leuchtdioden (LED) gebildet werden. Diese können bei geringem Stromverbrauch über einen langen Zeitraum eine Beleuchtung realisieren, ohne dass diese hohe Temperaturen im Betrieb aufweisen. Vorzugsweise sind diese LEDs in SMD-Technik ausgeführt und weisen daher geringe Abmaße auf.

Die beleuchtbare Baugruppe kann beispielsweise über die beleuchtbaren Bereiche, die zusätzlich als Funktionsbereiche ausgebildet sein können, eine Anzeige und Bedienung von Komponenten eines Fahrzeugs steuern. Solche Komponenten können beispielsweise Heizeinrichtungen, verstellbare Scheibenwischer, Beleuchtungseinrichtungen und/oder die Schließanlage betreffen. Es ist darüber hinaus auch möglich, andere Einrichtungen eines Fahrzeugs damit zu steuern und/oder deren Zustand über die beleuchtbaren Bereiche anzuzeigen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Darstellung einer Baugruppe mit beleuchtbaren Bereichen;
- Fig. 2: eine Draufsicht auf eine Blende der Baugruppe von Fig. 1;
- Fig. 3a,b: verschiedene Ansichten einer zweiten Leiterplatte der Baugruppe von Fig. 1;
- Fig. 4a,b: verschiedene Ansichten einer ersten Leiterplatte der Baugruppe von Fig. 1;
- Fig. 5a,b: verschiedene Ansichten einer Reflektorplatte der Baugruppe von Fig. 1;
- Fig. 6: eine schematische Schnittansicht durch die Reflektorplatte entlang der Linie A-A;
- Fig. 7: eine schematische Darstellung einer ersten Reflektoranordnung der Baugruppe von Fig. 1; und
- Fig. 8: eine schematische Darstellung einer zweiten Reflektoranordnung der Baugruppe von Fig. 1.

In den Zeichnungen mit gleichen Bezugszeichen versehene Komponenten entsprechen im Wesentlichen einander, sofern nichts anderes angegeben ist. Darüber hinaus wird darauf verzichtet Bestandteile zu zeigen und zu beschreiben, welche nicht wesentlich zum Verständnis der hier offenbarten technischen Lehre sind. Im Weiteren werden nicht für alle bereits eingeführten und dargestellten Elemente die Bezugszeichen wiederholt, sofern die Bestandteile selbst und deren Funktion bereits beschrieben wurden oder für einen Fachmann bekannt sind.

### Ausführliche Beschreibung eines Ausführungsbeispiels

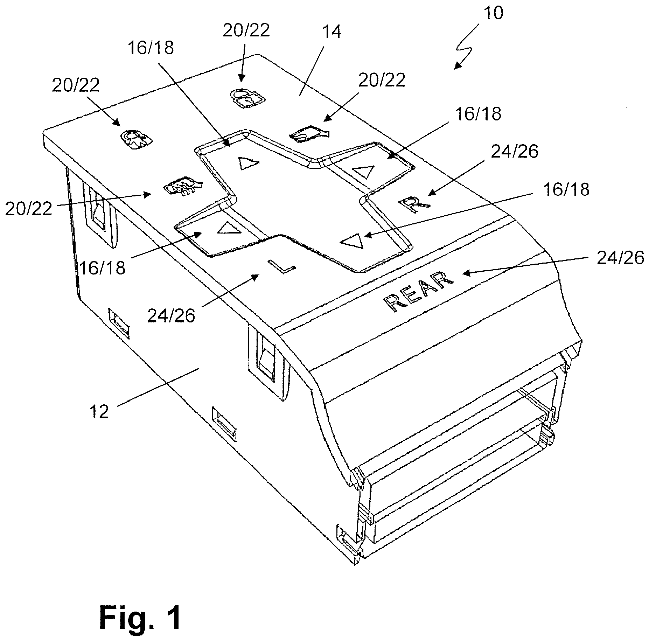

Fig. 1 zeigt eine perspektivische Darstellung einer Baugruppe 10 mit beleuchtbaren Bereichen 16, 20 und 24. Die beleuchtbaren Bereiche 16, 20 und 24 weisen Symbole 18, 22 und 26 auf. Die Symbole 18, 22 und 26 sind verschiedenen Zuständen und Einrichtungen zugeordnet. Zudem sind die Bereiche 16, 20 und 24 als Funktionsbereiche ausgebildet. Die Berührung oder Annäherung eines Fingers einer Person werden als Bedieneingaben wahrgenommen und über damit gekoppelte Elemente und Einrichtungen umgesetzt. So kann beispielsweise ein Verschwenken von elektrisch ansteuerbaren Seitenspiegeln, eine Beheizung eines Seitenspiegels und ein Verriegeln der Schließanlage eines Fahrzeugs erfolgen.

Die Baugruppe 10 weist ein Gehäuse 12 und eine Blende 14 auf. Die Blende 14 umfasst die beleuchtbaren Bereiche 16, 20 und 24 mit den Symbolen 18, 22 und 26.

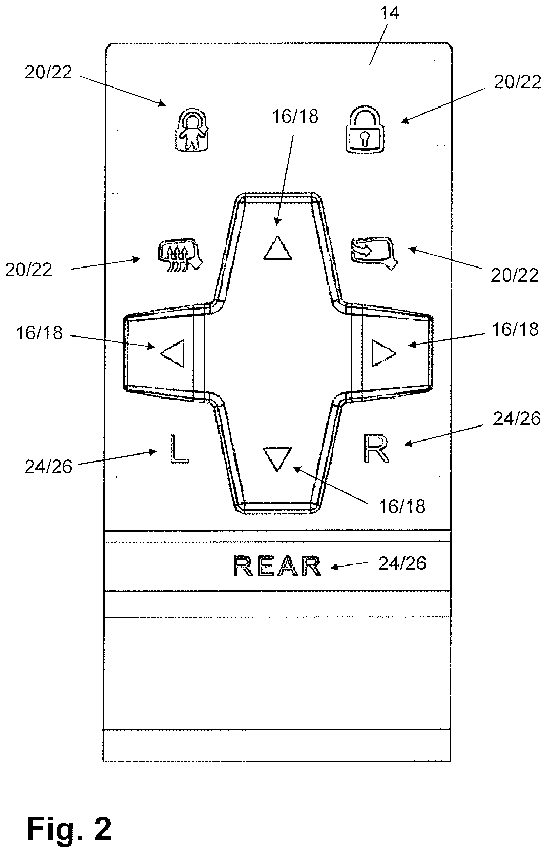

Die in dem Gehäuse 12 unterhalb der Blende 14 angeordneten Komponenten werden teilweise in den Figuren 2-8 dargestellt und erläutert.

Das Gehäuse 12 und die Blende 14 bestehen aus Kunststoff und können daher in einem Spritzgussprozess in hoher Stückzahl kostengünstig hergestellt werden. Die Blende 14 ist über nicht näher beschriebene Schnappverbindungen mit dem Gehäuse 12 verbunden. Die Blende 14 ist so ausgebildet, dass bei einer Beleuchtung von unten nur die Symbole 18, 22 und 26 beleuchtet werden. Dies kann durch eine Beschichtung der Blende 14, durch das Aufbringen einer Folie und/oder durch Abtragen einer Beschichtung im Bereich der Symbole 18, 22 und 26 erfolgen. Hierzu sind verschiedene Verfahren bekannt, um eine entsprechend ausgebildete Blende 14 bereitzustellen.

Den beleuchtbaren Bereichen 16 ist eine erste Reflektoranordnung 60 zugeordnet, die im Folgenden genauer beschrieben wird. Den beleuchtbaren Bereichen 20 ist eine zweite Reflektoranordnung 70 zugeordnet, die ebenfalls nachfolgend genauer beschrieben wird. Den beleuchtbaren Bereichen 24 mit den Symbolen 26 ist eine dritte Reflektoranordnung 80 zugeordnet, die eine einfache Ausgestaltung aufweist. Auch hierauf wird im Folgenden genauer eingegangen.

Fig. 2 zeigt eine Draufsicht auf die Blende 14 der Baugruppe 10. Die beleuchtbaren Bereiche 16, 20 und 24 sind so zueinander angeordnet und gruppiert, dass die beleuchtbaren Bereiche 16, 20 und 24 von einer einzelnen Lichtquelle beleuchtbar sind. Die beleuchtbaren Bereiche 20 auf der linken Seite sowie die beleuchtbaren Bereiche 20 auf der rechten Seite sind ebenfalls zusammengefasst und werden jeweils über eine zweite Reflektoranordnung 70 mit einer einzelnen beleuchteten Lichtquelle gemeinsam beleuchtet. Die vier beleuchtbaren Bereiche 16 werden ebenfalls über nur eine Lichtquelle beleuchtet. Die beleuchtbaren Bereiche 24 werden über eine dritte Reflektoranordnung 80 mit jeweils einer Lichtquelle beleuchtet.

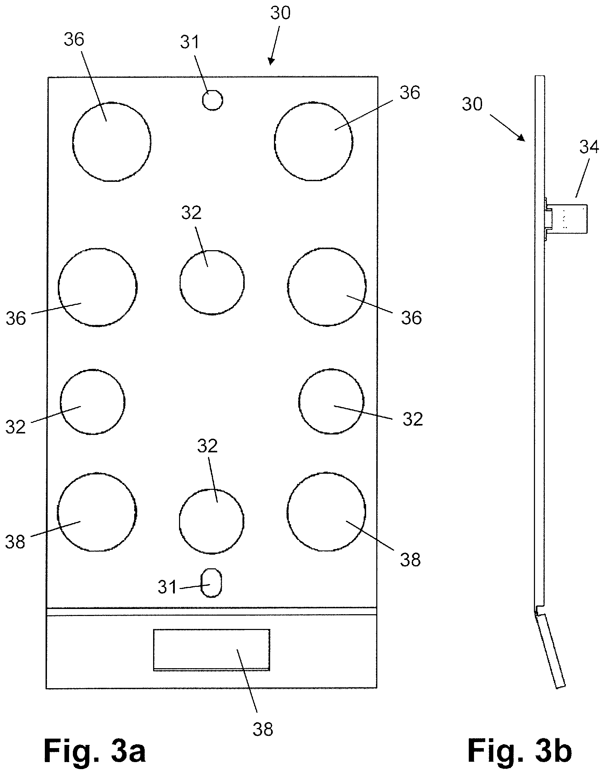

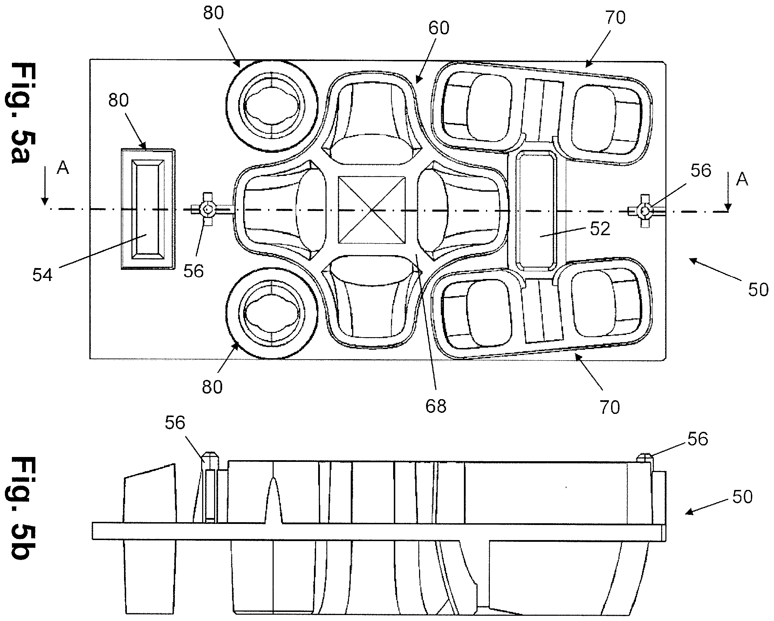

Die Fig. 3a und b zeigen verschiedene Ansichten einer zweiten Leiterplatte 30 der Baugruppe 10. Die zweite Leiterplatte 30 befindet sich direkt unterhalb der Blende 14 und weist eine Vielzahl an Öffnungen 31, 32, 36 und 38 auf. Die Öffnungen 31 dienen zur Aufnahme von Zapfen 56 einer Reflektorplatte 50 (siehe Fig. 5). Über die Öffnungen 31 und die Zapfen 56 erfolgt eine Verbindung der Reflektorplatte 50 mit der zweiten Leiterplatte 30.

Die Leiterplatte 30 weist zusätzlich Öffnungen 32 auf, welche den beleuchtbaren Bereichen 16 zugeordnet sind. Die Leiterplatte 30 selbst ist nicht durchleuchtbar, sodass die Öffnungen erforderlich sind. Die Öffnungen können zusätzlich den Bereich einengen, der beleuchtet wird. Die Öffnungen 36 sind den beleuchtbaren Bereichen 20 zugeordnet. Die Öffnungen 38 sind den beleuchtbaren Bereichen 24 zugeordnet.

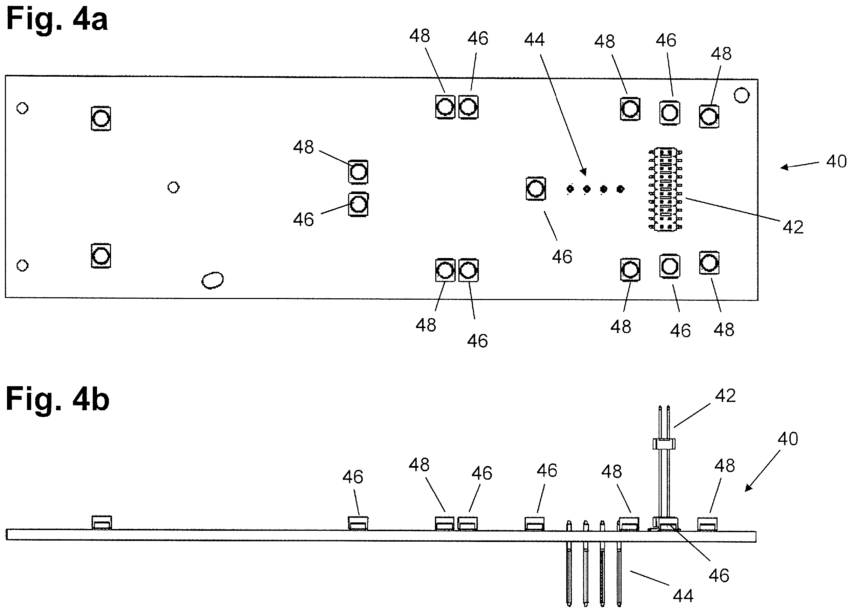

An der Unterseite der Leiterplatte 30 ist eine Buchsenleiste 34 angeordnet. Über diese Buchsenleiste 34 erfolgt eine Verbindung mit einer ersten Leiterplatte 40. Die erste Leiterplatte 40 weist hierzu eine Stiftleiste 42 auf (siehe Fig. 4) .

Die Leiterplatte 30 kann im Bereich der Öffnungen 32, 36 und 38 Sensorelemente aufweisen. Über die Sensorelemente kann eine Berührung oder Annäherung an die beleuchtbaren Bereiche 16, 20 und 24 erfasst werden. Die beleuchtbaren Bereiche 16, 20 und 24 sind hierzu als Funktionsbereiche ausgebildet. Eine Berührung der Bereiche oder Annäherung an die Bereiche führt daher zum Auslösen eines Bedienbefehls. Die Annäherung eines Fingers einer Bedienperson kann beispielsweise über die Sensorelemente im Bereiche der Öffnung 32, 36 und 38 erfasst und über die Verbindung mit der ersten Leiterplatte 40 an eine weitere Steuereinrichtung über einen Steuerbus weitergegeben werden. Infolgedessen kann es zu einer Veränderung von Einstellungen, beispielsweise der Ausrichtung eines Seitenspiegels, kommen.

Die Leiterplatte 30 ist flexibel ausgebildet. Zudem sind in der Leiterplatte 30 die Sensorelemente zur Erfassung von Bedienbefehlen integriert. Solche Leiterplatten 30 gibt es in verschiedenen Ausführungen.

Die Fig. 4a und 4b zeigen verschiedene Ansichten einer ersten Leiterplatte 40 der Baugruppe 10. Die Leiterplatte 40 ist im Gegensatz zur zweiten Leiterplatte 30 starr ausgebildet. Über die Stiftleiste 42 erfolgt eine Verbindung der ersten Leiterplatte 40 mit der zweiten Leiterplatte 30 über deren Buchsenleiste 34. An der Unterseite der Leiterplatte 40 (siehe Fig. 4b) sind Pins 44 angeordnet. Über diese erfolgt eine Energieversorgung und Kommunikation mit weiteren Einrichtungen. Die Pins 44 ragen aus dem Gehäuse 12 über eine Bodenplatte nach unten hervor und sind mit einem entsprechend ausgebildeten Stecker mit Aufnahmen für die Pins 44 verbunden.

Die Leiterplatte 40 weist weitere Elemente, wie Leitungen und elektronische Bauteile auf, die in den Figuren nicht dargestellt sind. Auf der Leiterplatte 40 sind zusätzlich erste LEDs 46 und zweite LEDs 48 angeordnet. Die ersten LEDs 46 geben Licht in einer weißen Farbe aus. Die zweiten LEDs 48 geben ein gelbes Licht aus. Die Aktivierung der zweiten LEDs erfolgt dann, wenn die entsprechenden Bereiche 16, 20 und 24 aktiviert werden oder aktiviert worden sind und damit eine Zustandsänderung anzeigen. Die LEDs 46 und 48 sind als SMD-Bauteile ausgeführt und weisen daher eine geringe Höhe auf.

Die Anordnung der LEDs 46 ist so gewählt, dass diese sich mittig im Bereich der ersten Reflektoranordnung 60 und der zweiten Reflektoranordnung 70 befinden. Die zweiten Reflektoranordnungen 70 weisen jeweils zusätzlich zwei zweite LEDs 48 auf. Die zweiten LEDs 48 dienen dazu, die jeweils ausgewählten Bereiche 20 einzeln zu beleuchten. Für die erste Reflektoranordnung 60 ist keine zweite Beleuchtung vorgesehen. Für die restlichen dritten Reflektoranordnungen 80 ist jeweils zur Beleuchtung der entsprechenden Symbole 26 jeweils eine erste LED 46 und eine zweite LED 48 vorgesehen.

Die Fig. 5a und b zeigen verschiedene Ansichten einer Reflektorplatte 50 der Baugruppe 10. Die Reflektorplatte 50 besteht aus Kunststoff und ist in einem Spritzgussprozess hergestellt. Zur Erzeugung der reflektierenden Oberflächen für die Reflektoranordnungen 60, 70 und 80 wird die Reflektorplatte 50 beschichtet. Die Beschichtung kann durch ein Aufsprühen oder durch ein Tauchbad aufgebracht werden.

Die erste Reflektoranordnung 60 weist im Wesentlichen vier gegenüberliegende Bereiche auf, welchen den entsprechenden Bereichen 60 und Symbolen 18 zugeordnet sind. In der Mitte befindet sich ein nicht bezeichneter zweiter Reflektor 64, der über Arme 68 mit den Wänden 62 der ersten Reflektoranordnung 60 verbunden ist. Die Ausgestaltung der ersten Reflektoranordnung 60 wird nachfolgend erläutert.

Die zweite Reflektoranordnung 70 weist zwei gegenüberliegende Bereiche auf, welche zur Beleuchtung der Bereiche 20 bzw. Symbole 22 dienen. Zwischen diesen Bereichen ist ebenfalls ein nicht bezeichneter zweiter Reflektor 74 angeordnet.

Die dritten Reflektoranordnungen 80 sind als Kanal ausgebildet. Die dritten Reflektoranordnungen 80 umgeben jeweils die beiden Leuchtdioden 46 und 48 und sind dementsprechend den beleuchtbaren Bereichen 24 und Öffnungen 36 zugeordnet. Über die Öffnung 52 ist die Stiftleiste 42 geführt.

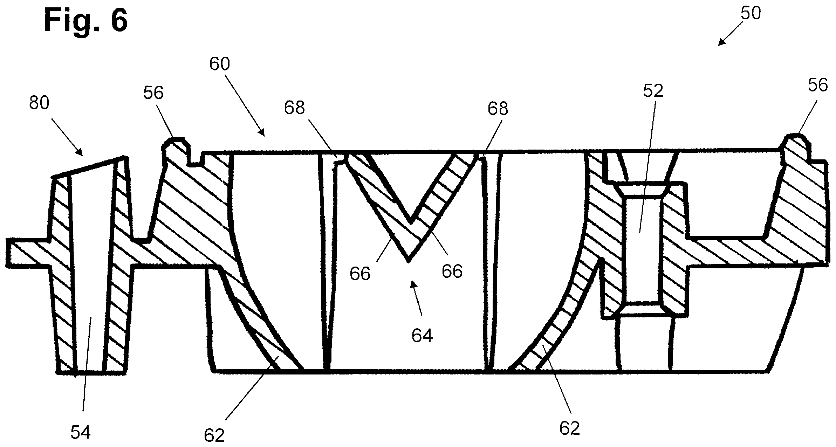

Fig. 6 zeigt eine schematische Schnitteinsicht durch die Reflektorplatte 50 entlang der Linie A-A von Fig. 5a. Die dritte Reflektoranordnung 80 mit der Öffnung 54 ermöglicht einen Lichtdurchtritt von unten nach oben, sodass es zu einer einfachen Beleuchtung kommt. Die reflektierende Ausbildung der gegenüberliegenden Wände (in den Figuren nicht bezeichnet) der dritten Reflektoranordnung 80 kann die Ausleuchtung unterstützen und eine homogene Beleuchtung bereitstellen.

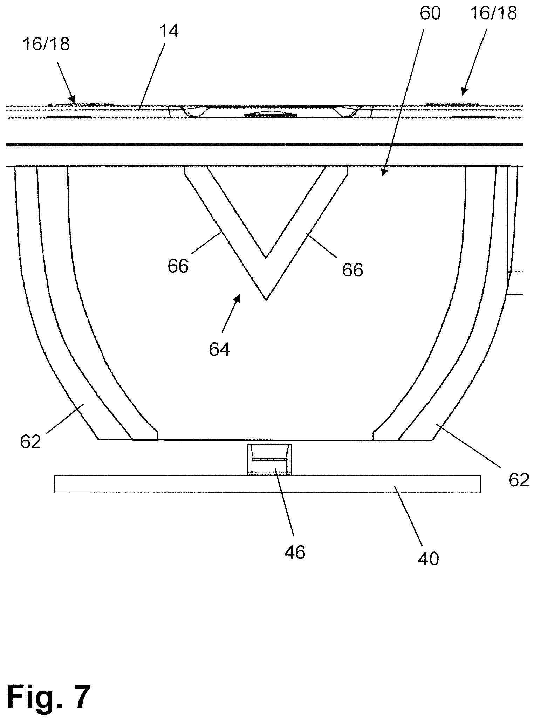

Die erste Reflektoranordnung 60 weist gegenüberliegend die gekrümmt ausgebildeten Wände 62 auf. Die Wände 62 sind in den jeweiligen Abschnitten über die Arme 68 und von den Armen 68 nach unten erstreckende Leisten getrennt und so ausgebildet, wie in Fig. 6 schematisch gezeigt. Da die Reflektoranordnung 60 insbesondere für die kreuzförmige Anordnung der beleuchtbaren Bereiche 16 ausgebildet ist, ergeben sich vier Abschnitte mit gekrümmten Wände 62, wobei die Übergänge zwischen den Wänden 62 der jeweiligen Abschnitte über die Arme 68 und von den Armen 68 nach unten erstreckende Leisten getrennt sind (siehe beispielsweise Fig. 5a). Im oberen Bereich der Reflektorplatte 50 weist die erste Reflektoranordnung 60 einen zweiten Reflektor 64 mit schrägen Flächen 66 auf. Der zweite Reflektor 64 ist pyramidenförmig ausgebildet, wie dies beispielsweise aus Fig. 5a schematisch ersichtlich ist. Jede der schrägen Flächen 66 ist einer gegenüberliegenden gekrümmten Wand 62 zugeordnet. Unterhalb des zweiten Reflektors 64 ist die erste LED 46 auf der Leiterplatte 40 angeordnet (siehe Fig. 7). Die Spitze des zweiten Reflektors 64 ist auf die erste LED 46 gerichtet. Zudem besteht ein Abstand zwischen der Spitze bzw. dem zweiten Reflektor 64 und der ersten LED 46. Die Ausbildung der schrägen Flächen 66 und die Krümmung der Wände 62 ermöglicht bei einer Beleuchtung durch eine einzelne LED 46 eine homogene Ausleuchtung der vier Bereiche 16 mit den Symbolen 18. Von der LED 46 abgegebenes Licht wird über die schrägen Flächen 66 des zweiten Reflektors 64 abgelenkt und trifft auf die gekrümmten Wände 62. Von dort werden die Lichtstrahlen durch Reflexion nach oben geleitet und bewirken eine homogene Ausleuchtung der Bereiche 16. Eine direkte Beleuchtung der Bereiche ohne den zweiten Reflektor 64 würde dazu führen, dass die Bereiche 16 unterschiedlich stark beleuchtet werden. Ohne einen zweiten Reflektor 64 könnte sich beispielsweise ein ringförmiges Beleuchtungsmuster über die vier gegenüberliegenden Bereiche 16 einstellen. Die Beleuchtung aller Bereiche 16 mit nur einer einzelnen LED 46, wobei alle Symbole 18 und Bereiche 16 homogen ausgeleuchtet werden, ist nur über die Ablenkung der Lichtstrahlen durch den zweiten Reflektor 64 möglich.

Insbesondere die gekrümmten bzw. abgerundeten Flächen der ersten Reflektoranordnung 60 unterstützen die homogene Ausleuchtung. Im Zusammenspiel mit den schrägen Flächen 66 erfolgt zuerst eine gezielte Lichtaufteilung in vier verschiedene Bereiche. Hierüber wird eine Ausleuchtung von Bereichen, die nicht beleuchtet werden sollen, beispielsweise auf Höhe der Arme 68, verhindert oder reduziert. Die pyramidenförmige Ausgestaltung des Reflektors 64 gewährleistet dabei eine gezielte Ausrichtung der auftreffenden Lichtstrahlen auf den zweiten Reflektor 64. Von dort aus gelangen die Lichtstrahlen in die entsprechenden Bereiche mit den gekrümmten Wänden 62, die zusätzlich zu einer Krümmung von unten nach oben auch eine seitliche Krümmung über deren Breite hinweg (siehe Fig. 5a) aufweisen. Im Bereich der Arme 68 bei dem in Fig. 6 gezeigten Ausführungsbeispiel sind die einzelnen Abschnitte über scharfe Kanten der Leisten getrennt. Diese scharfen Kanten sind für die angrenzenden Bereiche auf Höhe der Arme 68 in Fig. 6 schematisch gezeigt. Jeder Bereich mit den gekrümmten Seitenwänden 62 ist explizit für die für ihn erforderliche Gestaltung zur homogenen Ausleuchtung des darüber befindlichen Symbols 18 ausgebildet.

Fig. 7 zeigt eine schematische Darstellung der ersten Reflektoranordnung 60 der Baugruppe 10 von Fig. 1. Fig. 7 zeigt eine schematische Schnittansicht, wobei die zweite Leiterplatte 30 und weitere Komponenten nicht dargestellt sind. Das von der ersten LED 46 abgegebene Licht gelangt wie bereits vorstehend beschrieben, auf die schrägen Flächen 66 und wird über die Wände 62 nach oben zur homogenen Ausleuchtung der Symbole 18 abgelenkt.

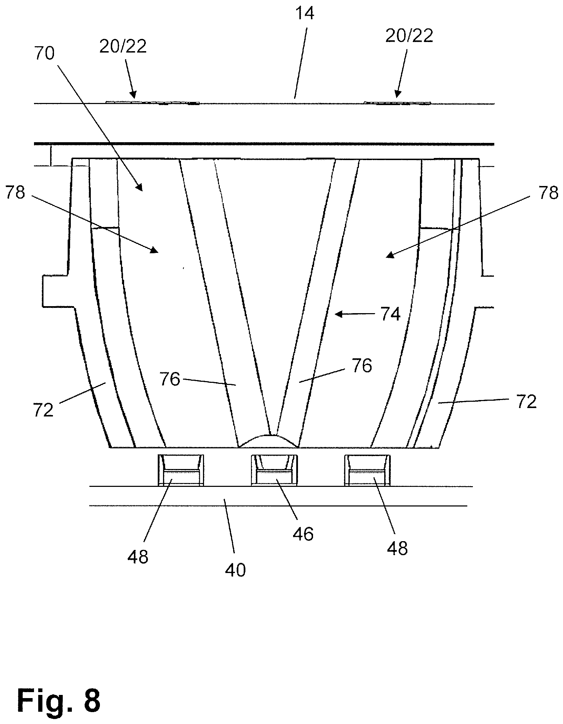

Fig. 8 zeigt schließlich eine schematische Darstellung der zweiten Reflektoranordnung 70 der Baugruppe 10. Die zweite Reflektoranordnung 70 weist einen zweiten Reflektor 74 auf, der die Reflektoranordnung 70 unterteilt. Hierdurch werden zwei Kanäle 78 ausgebildet. Die Kanäle 78 befinden sich zwischen den schrägen Flächen 76 des Reflektors 74 und den gegenüberliegenden Wänden 72 der Reflektoranordnung 70. Die schrägen Flächen 76 des Reflektors 74 erstrecken sich deutlich weiter nach unten als dies bei der ersten Reflektoranordnung 60 mit dem zweiten Reflektor 64 der Fall ist. Die schrägen Flächen 76 treffen in einem unteren Abschnitt zusammen, der nur geringfügig höher liegt als der untere Punkt der Wände 72. Der Abstand zwischen der Spitze des zweiten Reflektors 74 und der ersten LED 46 ist daher viel geringer als bei der ersten Reflektoranordnung 60. Das von der ersten LED 46 ausgegebene Licht gelangt dennoch in beide Kanäle 78, wobei über die schrägen Flächen 76 eine Lichtablenkung durch Reflexion auf die gekrümmten Seitenwände 72 und von den gekrümmten Seitenwänden 72 nach oben zur homogenen Ausleuchtung der Bereiche 20 erfolgt. Da der Reflektor 74 weiter nach unten ragt als bei der ersten Reflektoranordnung 60 ist der Winkel zwischen den beiden schrägen Flächen 76 deutlich geringer als bei dem zweiten Reflektor 64. Auch die Wände 72 weisen eine geringere Krümmung bzw. einen steileren Verlauf auf als die Wände 62. Ein Grund hierfür ist die Ausbildung des Reflektors 74, der im Wesentlichen vollständig nach unten ragt.

Zusätzlich weist die zweite Reflektoranordnung 70 zwei zweite LEDs 48 auf. Die zweiten LEDs 48 sind jeweils einem Kanal 78 zugeordnet. Zudem befinden sich die zweiten LEDs 48 exzentrisch zu den Kanälen 78. Diese außermittige Anordnung der LEDs 48 unterstützt die Beleuchtung des entsprechenden Kanals 78 zur Illuminierung der Bereiche 20.

Der Reflektor 74 dient zusätzlich als Lichtschott für eine zweite LED 48 des anderen Bereichs 20 bzw. Kanals 78. Von einer der LEDs 48 ausgegebenes Licht kann immer nur innerhalb des Kanals 78 des ihm zugeordneten Bereichs 20 zur Beleuchtung des Symbols 22 nach oben gelangen. Seitlich abstrahlendes Licht wird über die schrägen Flächen 76 zurück in den Kanal 78 geworfen und über die Wand 72 nach oben oder ebenfalls zu den schrägen Flächen 76 geleitet. Es ist jedoch nicht möglich, dass Licht von einer zweiten LED 48 in einen benachbarten Kanal 78 gelangt. Der Reflektor 74 dient daher auch als Lichtschott.

Die Grundbeleuchtung für die Reflektoranordnung 70 wird über die erste LED 46 bereitgestellt, die eine homogene Beleuchtung beider Bereiche 20 bzw. Symbole 22 bereitstellt. Wird einer der als Funktionsbereiche dienenden Bereiche 20 aktiviert, so erfolgt eine Beleuchtung dieses Bereichs 20. Zur Beleuchtung wird eine andere Beleuchtung wie über die erste LED 46 benötigt, die über die zweite LED 48 bereitgestellt wird. Damit auch nur dieser Bereich in der zweiten Farbe beleuchtet wird, erfolgt die Ansteuerung der jeweils zugeordneten zweiten LED 48. Diese gibt ein Licht aus, das zur Beleuchtung des Symbols 22 in einer anderen Farbe dient. Über den Reflektor 74 wird dabei verhindert, dass das Licht in den benachbarten Kanal 78 gelangt.

Die hierin beschriebene Ausführung einer Baugruppe 10 stellt die Beleuchtung verschiedener Bereiche 16 und 20 mit jeweils nur einer ersten LED 46 bereit. Die beschriebene Ausführung weist gegenüber bekannten Ausführungen den Vorteil auf, dass auf zusätzliche Beleuchtungsmittel (Lichtquellen, Lichtleiter etc.) verzichtet werden kann. Zusätzlich entfallen weitere Bauteile und Verbindungen für die ansonsten notwendigen Leuchtmittel. Dadurch ergeben sich Vorteile hinsichtlich reduzierter Kosten, eines geringeren Gewichts, eines geringeren Energieverbrauchs, geringerer Wärmeentwicklung, geringerem Bauraum und einer verkürzten Herstellungszeit.

### Bezugszeichenliste

- 10: Baugruppe
- 12: Gehäuse
- 14: Blende
- 16: beleuchtbarer Bereich
- 18: Symbol
- 20: beleuchtbarer Bereich
- 22: Symbol
- 24: beleuchtbarer Bereich
- 26: Symbol
- 30: zweite Leiterplatte
- 31: Öffnung
- 32: Öffnung
- 34: Buchsenleiste
- 36: Öffnung
- 38: Öffnung
- 40: erste Leiterplatte
- 42: Stiftleiste
- 44: Pin
- 46: erste LED
- 48: zweite LED
- 50: Reflektorplatte
- 52: Öffnung
- 54: Öffnung
- 56: Zapfen
- 60: erste Reflektoranordnung
- 62: Wand
- 64: zweiter Reflektor
- 66: Fläche
- 68: Arm
- 70: zweite Reflektoranordnung
- 72: Wand
- 74: zweiter Reflektor
- 76: Fläche
- 78: Kanal
- 80: dritte Reflektoranordnung

## Patentansprüche

1. Reflektoranordnung zur Beleuchtung von verschiedenen Bereichen (16; 20; 24), die zueinander beabstandet sind, mit einer ersten Lichtquelle und mindestens einer zweiten Lichtquelle und einem Hohlreflektor, welcher die Bereiche (16; 20; 24) umfasst, wobei
- ein zweiter Reflektor (64; 74) angeordnet ist, der mindestens zwei Reflexionsflächen(66; 76) aufweist, die zueinander geneigt sind,
- die erste Lichtquelle und der zweite Reflektor übereinanderliegend angeordnet sind,
- die erste Lichtquelle derart angeordnet ist, dass eine Beleuchtung der Bereiche (16; 20; 24) durch eine Lichtreflexion über den zweiten Reflektor (64; 74) und den Hohlreflektor bereitgestellt ist, und
- der zweite Reflektor (64; 74) über der ersten Lichtquelle angeordnet ist, **dadurch gekennzeichnet, dass**
- zwischen dem zweiten Reflektor (74) und einer gegenüberliegenden Wand (72) des Hohlreflektors mindestens zwei Kanäle (78) ausgebildet sind, die jeweils mindestens einem beleuchtbaren Bereich (20) zugeordnet sind, aufweisend mindestens eine zweite Lichtquelle, die mindestens einem beleuchtbaren Bereich (20) zugeordnet ist, wobei der zweite Reflektor (74) als Lichtschott für andere beleuchtbare Bereiche (20) dient, und
- die mindestens eine zweite Lichtquelle exzentrisch angeordnet und der Wand (72) des Hohlreflektors zugewandt ist.

2. Reflektoranordnung nach Anspruch 1, wobei der zweite Reflektor (64; 74) aufeinander zulaufende, schräge Flächen (66; 76) aufweist und die Spitze des zweiten Reflektors (64; 76) auf die erste Lichtquelle gerichtet ist.

3. Reflektoranordnung nach einem der Ansprüche 1 bis 2, wobei der Hohlreflektor nach innenragende Arme (68) aufweist, die mit dem zweiten Reflektor (64) verbunden sind.

4. Reflektoranordnung nach einem der Ansprüche 1 bis 3, wobei der Hohlreflektor gekrümmte Wände (62; 72) aufweist.

5. Reflektoranordnung nach einem der Ansprüche 1 bis 4, wobei der zweite Reflektor (64; 74) pyramidenförmig oder kegelförmig ausgebildet ist.

6. Beleuchtbare Baugruppe, mindestens aufweisend ein Gehäuse (12) mit einer Deckschicht mit beleuchtbaren Bereichen (16; 20; 24), die Symbole (18; 22; 26) und/oder Zeichen aufweisen, und eine Reflektoranordnung (60; 70) nach einem der Ansprüche 1 bis 5, wobei unterhalb der Deckschicht ein Hohlreflektor angeordnet ist, der die Symbole (18; 22; 26) und/oder Zeichen umgibt, wobei der Hohlreflektor einen zweiten Reflektor (64; 74) umgibt, der so angeordnet ist, dass von einer ersten Lichtquelle abgegebenes Licht über den zweiten Reflektor (64; 74) und den Hohlreflektor zu den beleuchtbaren Bereichen (16; 20; 26) reflektiert und dass zwischen dem zweiten Reflektor (74) und einer gegenüberliegenden Wand (72) des Hohlreflektors Kanäle (78) ausgebildet sind, die jeweils mindestens einem beleuchtbaren Bereich (20) zugeordnet sind, aufweisend mindestens eine zweite Lichtquelle, die mindestens einem beleuchtbaren Bereich (20) zugeordnet ist, wobei der zweite Reflektor (74) als Lichtschott für andere beleuchtbare Bereiche (20) dient.

## Claims

1. Reflector assembly for illuminating different mutually spaced-apart regions (16; 20; 24), with a first light source and at least one second light source and a hollow reflector, which comprises the regions (16; 20; 24), wherein
- a second reflector (64; 74) having at least two reflective surfaces (66; 76) inclined relative to one another is arranged,
- the first light source and the second reflector are arranged one above the other,
- the first light source is so arranged that illumination of the regions (16; 20; 24) is provided by light reflection via the second reflector (64; 74) and
- the second reflector (64; 74) is arranged above the first light source,
**characterised in that**
- formed between the second reflector (74) and an opposite wall (72) of the hollow reflector are at least two channels (78) which are each associated with at least one respective illuminatable region (20), comprising at least one second light source which is associated with at least one illuminatable region (20), wherein the second reflector (74) serves as light partition for other illuminatable regions (20) and
- the at least one second light source is arranged eccentrically and faces the wall (72) of the hollow reflector.

2. Reflector assembly according to claim 1, wherein the second reflector (64; 74) has inclined surfaces (66; 76) running towards one another and the tip of the second reflector (64; 76) is oriented towards the first light source.

3. Reflector assembly according to one of claims 1 and 2, wherein the hollow reflector has inwardly projecting arms (68) which are connected with the second reflector (64).

4. Reflector assembly according to any one of claims 1 to 3, wherein the hollow reflector has curved walls (62; 72).

5. Reflector assembly according to any one of claims 1 to 4, wherein the second reflector (64; 74) is of pyramidal or conical construction.

6. Illuminatable subassembly at least comprising a housing (12) with a cover layer with illuminatable regions (16; 20; 24), which have symbols (18; 22; 26) and/or characters, and a reflector assembly (60; 70) according to any one of claims 1 to 5, wherein a hollow reflector which surrounds the symbols (18; 22; 26) and/or characters is arranged below the cover layer, wherein the hollow reflector surrounds a second reflector (64; 74), which is so arranged that light delivered by a first light source is reflected by way of the second reflector (64; 74) and the hollow reflector to the illuminatable regions (16; 20; 26) and that formed between the second reflector (74) and an opposite wall (72) of the hollow reflector are channels (78) which are each associated with at least one reflective illuminatable region (20), comprising at least one second light source, which is associated with at least one illuminatable region (20), wherein the second reflector (74) serves as light partition for other illumintable regions (20).

## Revendications

1. Disposition des réflecteurs pour éclairer différentes zones (16; 20; 24) qui sont espacées les unes des autres, avec une première source de lumière et au moins une deuxième source de lumière et un réflecteur creux, qui comprend les zones (16; 20; 24), dans
- dans lesquelles est disposé un deuxième réflecteur (64; 74), qui présente au moins deux surfaces de réflexion (66; 76), qui sont inclinés les uns par rapport aux autres,
- la première source lumineuse et le second réflecteur sont disposés l'un au-dessus de l'autre,
- la première source lumineuse est disposée de telle manière que l'éclairage des secteurs (16 ; 20; 24) soit obtenu par réflexion de la lumière via le deuxième réflecteur (64; 74) et le réflecteur creux soit fourni, et
- le second réflecteur (64; 74) est disposé au-dessus de la première source lumineuse,
**caractérisé en ce que**
- entre le deuxième réflecteur (74) et une paroi opposée (72) du réflecteur creux au moins deux canaux sont formés (78), qui sont chacun affectés à au moins une zone illuminable (20), comprenant au moins une deuxième source de lumière qui est affectée à au moins une région illuminable (20), où le second réflecteur (74) sert de cloison légère pour les autres zones éclairées (20) et
- la deuxième source lumineuse au moins est disposée de manière excentrée et fait face à la paroi (72)

2. Ensemble réflecteur selon la revendication 1, dans lequel le second réflecteur (64; 74) présente des surfaces convergentes et inclinées (66; 76) et la pointe du second réflecteur (64; 76) est dirigée vers la première source de lumière.

3. Ensemble réflecteur de l'une quelconque des revendications 1 à 2, dans lequel le réflecteur creux comprend des bras (68) faisant saillie vers l'intérieur et reliés au second réflecteur (64).

4. Assemblage de réflecteur selon l'une quelconque des revendications 1 à 3, dans lequel le réflecteur creux a des parois courbes (62; 72).

5. Ensemble réflecteur de l'une quelconque des revendications 1 à 4, dans lequel le second réflecteur (64; 74) est de forme pyrarnoïdale ou conique.

6. Ensemble illuminable comprenant au moins un boîtier (12) ayant une couche de couverture avec des zones illuminables (16; 20; 24), les symboles (18; 22; 26) et/ou des signes, et une disposition des réflecteurs (60; 70) selon l'une des revendications 1 à 5, dans lequel un réflecteur creux est disposé sous la couche de couverture, lequel réflecteur affiche les symboles (18; 22; 26) et/ou les caractères, où le réflecteur creux entoure un second réflecteur (64; 74), disposé de telle sorte que la lumière émise par une première source lumineuse est transmise à travers le second réflecteur (64; 74) à une seconde source lumineuse et et le réflecteur creux vers les zones illuminables (16; 20; 26) et celle entre le second réflecteur (74) et une paroi opposée (72) des canaux du réflecteur creux (78),dont chacune est associée à au moins une région illuminable (20), comprenant au moins une seconde source de lumière qui est associée à au moins une zone illuminable (20), où le second réflecteur (74) sert de barrière lumineuse pour les autres zones éclairables (20).
